# EUROPEAN PATENT SPECIFICATION

(11) **EP 1 588 797 B1**
(45) Date of publication and mention of the grant of the patent: **16.08.2006**
(21) Application number: 05252511.0
(22) Date of filing: 22.04.2005
(51) Int. Cl.: B23Q 11/08, G09G 3/36

(54) **Machine tool**
Werkzeugmaschine
Machine-outil

(30) Priority: 22.04.2004 JP 2004127076
(43) Date of publication of application: 26.10.2005
(73) Proprietor: FANUC LTD, Minamitsuru-gun, Yamanashi 401-0597 (JP)
(72) Inventor: Kanda, Kunio, Shizuoka, 412-0021 (JP); Yamato, Shinobu, Tokyo, 191-0012 (JP)
(74) Representative: Billington, Lawrence Emlyn

(56) References cited:
- EP-A- 1 484 133
- WO-A-02/071131
- US-A- 4 711 035

## Description

### BACKGROUND OF THE INVENTION

### 1. Field of the Invention

The present invention relates to a machine tool, and more particularly to a machine tool with a cover enclosing a machining area space to prevent scattering of cutting waste and cutting fluid.

### 2. Description of Related Art

There is known a machine tool with a cover enclosing a machining area space, which is called a splash guard, so as to prevent cutting waste and cutting fluid from scattering and thus dirtying the surroundings. In a machine tool of this type, a transparent observation window is provided in a front of the cover in order to check condition of a workpiece. In addition, a display device for displaying a machining program and setting data, a keyboard for inputting data and a control panel provided with various operating switches are arranged on a front surface of the machine tool. See, for example, Seiken YAMAGISHI, "Zukai NC Kousaku Kikai no Nyuumon" (Illustrated Introduction to NC Machine Tools), Tokyo Denki Daigaku Shuppankyoku (Tokyo Denki University Press), 1986, pp. 185-186.

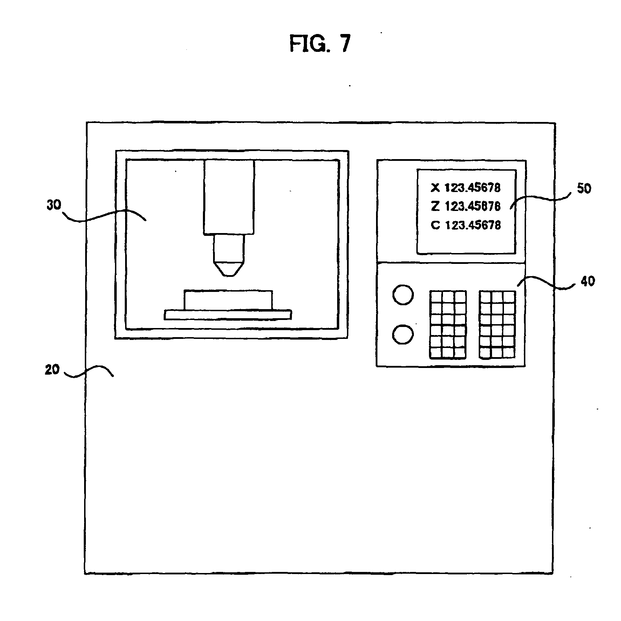

FIG. 7 is a schematic diagram of a machine tool of the above type. In the example shown in FIG. 7, the entire machine tool is covered by a cover 20. The cover 20 is provided with an observation window 30 which is covered by a transparent panel on a front surface so that the machining area can be observed. A control panel 40 and a display device 50 are arranged next to the observation window 30 at positions where they can be easily seen and operated by an operator. The above arrangement is a typical example of a conventional machine tool in which a machining area space is enclosed by a cover having an observation window.

However, the conventional machine tool described above has a problem that the cover becomes large and thus the size of the overall machine increases because the cover is required to have a sufficient size for providing the display device and the control panel even if the machining area is not so large.

Document US 4 711 035 discloses a further machine tool with a display device and observation window according to the preamble of claim 1.

### SUMMARY OF THE INVENTION

The present invention provides a machine tool with a small cover inclosing the machine tool and a compact overall size in spite of arranging an observation window and a display device on a front face of a cover at a location where they can be easily seen.

The machine tool of the present invention comprises: a cover enclosing a machining area space; a transparent observation window provided on a front surface of the cover; and a display device provided in the observation window that becomes transparent or semi-transparent when a displayed image disappears. A control panel may be arranged below the observation window.

According to the present invention, the display device is positioned in the observation window to thereby eliminate the need to provide a dedicated space for the display device on the cover. Accordingly, the cover can be made smaller and the overall machine can be made compact.

Further, the present invention makes it possible to arrange the display device where it can be seen easily by an operator together with the observation window, and because any image on the display device disappears during operation of the machine tool and the display device becomes transparent or semi-transparent, the state of the workpiece can be easily confirmed by looking at the machining area from the observation window.

### BRIEF DESCRIPTION OF THE DRAWINGS

FIG. 1 is a diagram showing a perspective view of a machine tool according to a first embodiment of the present invention, with a display-in use;
FIG. 2 is a diagram showing a perspective view of the machine tool according to the first embodiment, with the display not in use;
FIG. 3 is a diagram showing a perspective view of the machine tool according to the first embodiment, with an observation window open;
FIG. 4 is a diagram showing a perspective view of the display according to the first embodiment;
FIG. 5 is a diagram showing a front view of a machine tool according to a second embodiment of the present invention, with a display in use;
FIG. 6 is a diagram showing a front view of the machine tool according to the second embodiment, with the display not in use; and
FIG. 7 is a diagram showing a front view of a conventional machine tool.

### DETAILED DESCRIPTION

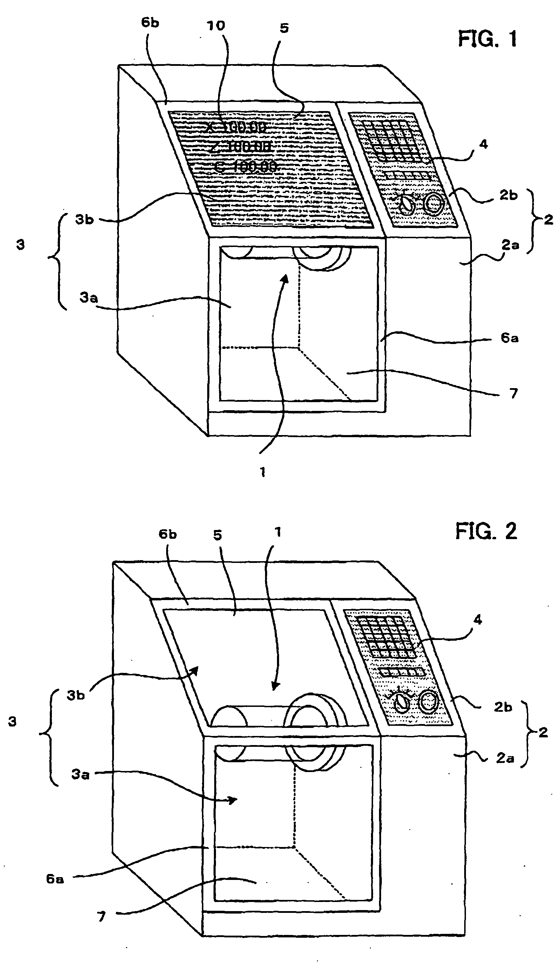

A first embodiment of the present invention is shown in FIGS. 1-4. As shown in FIGS. 1-3, the machine tool of the present invention comprises a cover 2 which encloses the entire machine tool including a machining area space 1, and an observation window 3 and a control panel 4 is provided on a front surface of the cover 2. Further, a display device 5 is provided on the observation window 3.

The machining area space 1 is an area where a workpiece is machined by a tool, and since cutting waste and cutting fluid scatter from a machining point the machining area space 1 is enclosed by the cover 2. Then, in order to monitor a machining state, the observation window 3 with a cover made of a transparent material is provided in the cover 2 enclosing the machining area space 1.

The cover 2 encloses at least the machining area space 1 of the machine tool, and is made of an opaque and durable material such as metal except for the observation window 3.

In this embodiment, a front bottom portion 2a of the cover 2 rises vertically, and a front top portion 2b of the cover 2 slants inward at the top.

The control panel 4 is arranged on one side of the front top portion 2b. The basic structure of the control panel 4 is the same as that of a conventional control panel which consists of a keyboard, switches and so forth.

The observation window 3 comprises a top observation window 3b provided on the other side of the front top portion 2b opposite the one side on which the control panel 4 is located and a bottom observation window 3 a provided on the front bottom portion 2a below the top observation window 3b.

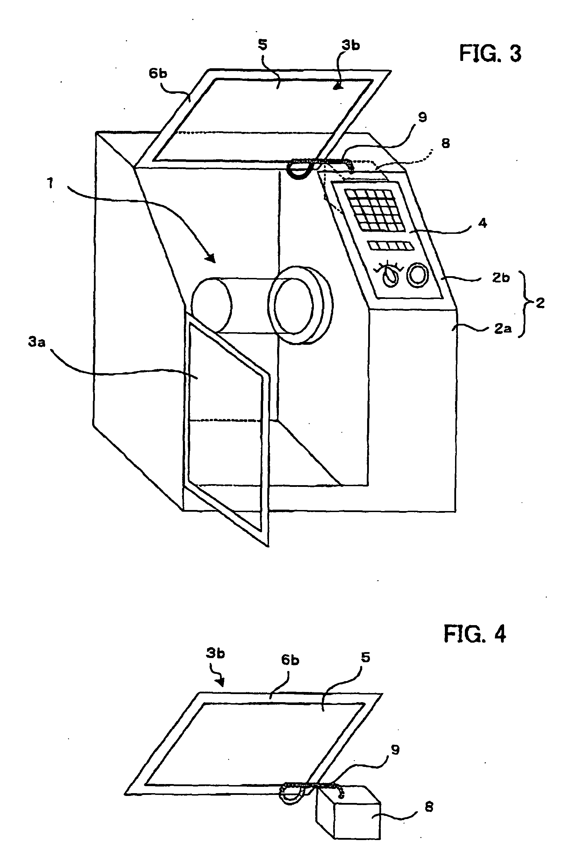

As shown in FIG. 3, the top observation window 3b and the bottom observation window 3a are separated from each other. The bottom observation window 3a is hinged at a lateral edge thereof and can be opened and closed, and the top observation window 3b is hinged at a top edge thereof and can be opened and closed.

The bottom observation window 3 a is formed by fitting a transparent panel 7 to the inner periphery of a window frame 6a, in such a way that the machining area space 1 can be seen through the transparent panel 7.

The upper observation window 3b is formed by fitting the display device 5 to the inner periphery of a window frame 6b.

As shown in FIG. 4, the display device 5 is connected with a display circuit 8 of a numerical controller through a cable 9 for signal transmission and power supply. As shown in FIG. 1, the display device 5 displays machining programs, data setting screens and the like as an image 10 in response to operations on the control panel 4.

The display device 5 is opaque when activated and displays the display image 10 as shown in FIG. 1, but is transparent or semi-transparent when the image 10 is erased so that the state of the machining area can be seen. A display device having a display screen using an organic light-emitting diode (OLED) or an organic electro-luminescence (OEL) can be adopted as the display device 5.

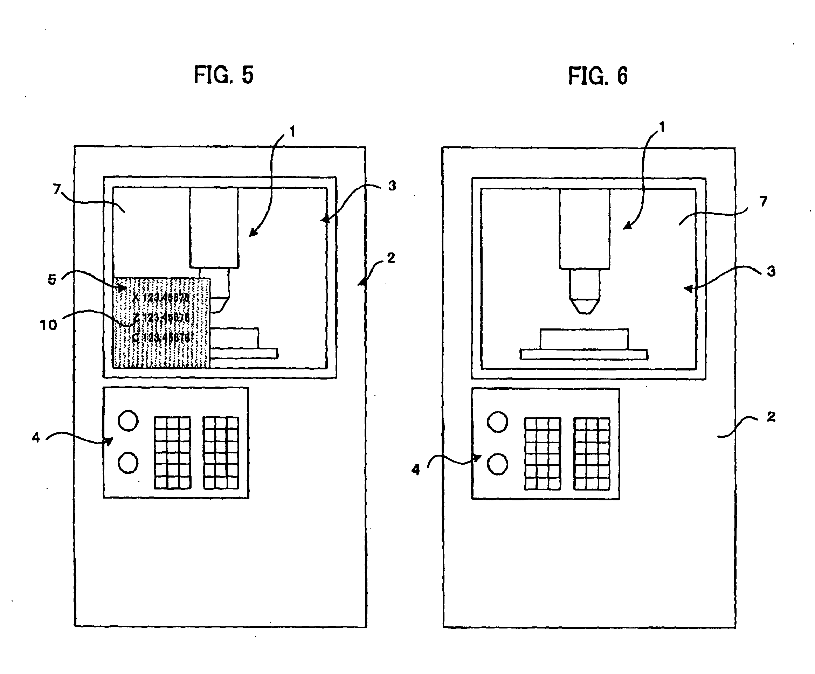

A second embodiment of the present invention is shown in FIGS. 5 and 6. FIG. 5 is a front view of the machine tool when the display device is in use and FIG. 6 is a front view of the machine tool when the display device is not in use.

An observation window 3 which is hinged to be opened and closed is provided at an upper portion of a front surface of the cover 2 which encloses the machining area space 1 of the machine tool. The control panel 4 is arranged below the observation window 3 on the front surface of the cover 2.

The display device 7 for displaying an image 10 is provided at a part of the transparent panel 7 of the observation window 3, as shown in FIG. 5. The display device 5 becomes transparent or semi-transparent when the image 10 disappears, as shown in FIG. 6, so that the machine tool machining area space 1 is visible. It should be noted that the remaining structures are substantially identical to those of the first embodiment.

## Claims

1. A machine tool comprising:
a cover (2) enclosing a machining area space;
a transparent observation window (3) provided on a front surface of said cover (2); and
a display device (5) provided in said observation window (3) **characterized in that** said display device becomes transparent or semi-transparent when a displayed image disappears.

2. A machine tool according to claim 1, wherein a control panel (4) is arranged below said observation window (3).

## Patentansprüche

1. Werkzeugmaschine, umfassend:
ein Gehäuse (2), das eine Zerspanungszone umgibt;
ein durchsichtiges Beobachtungsfenster (3), das sich auf der Vorderseite des Gehäuses (2) befindet; und
eine Anzeigevorrichtung (5), die sich in dem Beobachtungsfenster (3) befindet, **dadurch gekennzeichnet, dass** die Anzeigevorrichtung durchsichtig oder halbdurchsichtig wird, wenn ein angezeigtes Bild verschwindet.

2. Werkzeugmaschine nach Anspruch 1, wobei ein Steuerfeld (4) unter dem Beobachtungsfenster (3) angeordnet ist.

## Revendications

1. Machine-outil comprenant :
un couvercle (2) renfermant un espace de zone d'usinage ;
une fenêtre d'observation transparente (3) réalisée sur une surface frontale dudit couvercle (2), et
un dispositif d'affichage (5) réalisé dans ladite fenêtre d'observation, **caractérisé en ce que** ledit dispositif d'affichage devient transparent ou semi-transparent lorsqu'une image affichée disparaît.

2. Machine-outil selon la revendication 1, où un tableau de commande (4) est agencé en dessous de ladite fenêtre d'observation (3).
